# EUROPÄISCHE PATENTSCHRIFT

(11) **EP 0 884 397 B1**
(45) Veröffentlichungstag und Bekanntmachung des Hinweises auf die Patenterteilung: **09.01.2002**
(21) Anmeldenummer: 98201430.0
(22) Anmeldetag: 04.05.1998
(51) Int. Cl.: C22C 32/00, C03B 37/095

(54) **Verwendung einer Molybdän und/oder Wolfram Legierung für Bauteilen, die mit Glas- und/oder Keramikschmelzen in Berührung kommen**
Use of a molybdenum and/or tungsten alloy for construction elements, in contact with molten glas and/or ceramic substances
Application d'un alliage de molybdène et/ou de tungstène pour éléments de construction, entrant en contact avec du verre et/ou de la céramique en fusion

(30) Priorität: 09.05.1997 AT 28597 U
(43) Veröffentlichungstag der Anmeldung: 16.12.1998
(73) Patentinhaber: PLANSEE Aktiengesellschaft, 6600 Reutte, Tirol (AT)
(72) Erfinder: Leichtfried, Gerhard, Dr., 6600 Reutte (AT); Martinz, Hans Peter, Dr., 6600 Höfen (AT); Disam, Joachim, Dr., 55116 Mainz (DE)
(74) Vertreter: Lohnert, Wolfgang, Dr.

(56) Entgegenhaltungen:
- WO-A-85/03953
- WO-A-88/05830
- WO-A-93/21357
- WO-A-96/22402
- FR-A- 2 573 094

## Beschreibung

Die Erfindung betrifft die Verwendung einer Legierung auf Basis von Molybdän und/oder Wolfram für Bauteile, die mit Glas- und/oder Keramikschmelzen in Berührung kommen.

Von den Refraktärmetallen als Hochtemperaturwerkstoffe werden primär hohe mechanische Festigkeit bzw. gutes Kriechverhalten bei hohen Einsatztemperaturen erwartet. Entsprechend fehlte es in der Vergangenheit nicht an vielfältigen Vorschlägen, durch Legierungsbildung diese Eigenschaften zu verbessern.
In der AT 386 612 wird beispielsweise eine Legierung aus hochschmelzenden Metallen, wie Molybdän und Wolfram, mit spezifischer Gefügeausbildung beschrieben, welche 0,005 - 10 Gew.% einer oder mehrerer hochschmelzender Verbindungen enthalten, unter anderem aus Oxiden und/oder Silikaten. Praktische Verwendung erfahren vor allem Molybdän-Wolfram-Legierungen mit kleinen Oxidanteilen, vorzugsweise unter 2 Gew.%.

Bauteile, die mit Glas- und/oder Keramikschmelzen in Berührung kommen, wie Schmelzelektroden, Auskleidungen, Rührvorrichtungen, Rohrleitungen, Umlenkungen und dergleichen, müssen nebeneinander eine Vielzahl von hohen Anforderungen erfüllen. Sie müssen insbesondere hohe chemische Beständigkeit gegenüber der Schmelze, hohe Oxidationsbeständigkeit, ausreichende mechanische Festigkeit bei Einsatztemperaturen zwischen etwa 1100°C und 1600°C, sowie hohe mechanische Temperaturwechselfestigkeit besitzen.
Bei Glasschmelzelektroden als Beispiel für derartige Bauteile kommt noch die Forderung nach guter elektrischer Leitfähigkeit hinzu. Darüberhinaus sollten die Bauteile mechanisch gut bearbeitbar sein und die Schmelze möglichst nicht verunreinigen.

Als Werkstoff zur Herstellung von Schmelzelektroden, dem mengenmäßig größten Anteil an derartigen Bauteilen, wurden in der Vergangenheit die hochschmelzenden Metalle Molybdän und Wolfram, sowie bestimmte Legierungen dieser Metalle, deren Silizide, aber auch Werkstoffe wie Graphit, Platin oder keramische Werkstoffe wie Zinnoxid verwendet. Darüber hinaus hat man auch versucht, durch spezielle Beschichtungen des Elektrodenwerkstoffes das Korrosions- und Oxidationsverhalten weiter zu verbessern.
Die hochschmelzenden Werkstoffe Molybdän rein, Mo30W oder Molybdän mit 0,5 Vol.% ZrO₂ (bekannt unter der Kurzbezeichnung PSZ, Z6) werden in der Praxis trotz gewisser Nachteile als Werkstoff für Bauteile verwendet, die mit Glas- oder Keramikschmelzen in Standard-Zusammensetzungen (kein Sonderglas) in Berührung kommen. Für stark korrodierende Sorten von Glas- bzw. Keramikschmelzen ist das Korrosionsverhalten dieser Werkstoffe jedoch ungenügend. Stark korrodierende Glas- bzw. Keramikschmelzen sind insbesondere solche mit merklichen Anteilen an polyvalenten Ionen, z.B. As, Sb, Zn, Ni, Mn, Co, Pb und Sulfat. Die Standzeit des Werkstoffes wird dabei sowohl durch den gleichmäßigen, oberflächlichen oxidativen Abtrag des Molybdäns als auch durch einen örtlich selektiven Korrosionsangriff bestimmt.
Bis heute sind keine wirtschaftlich und technisch zufriedenstellenden Maßnahmen bekannt, welche eine chemische Verunreinigung von hochkorrosiven Glasschmelzen, d.h. von Schmelzen mit polyvalente Ionen bildenden Zusätzen, durch Korrosionsprodukte der Bauteilwerkstoffe Molybdän/Wolfram verhindern. Dabei kommt erschwerend hinzu, daß die in der Schmelze ablaufenden Korrosionsmechanismen im Detail nicht bekannt sind.

Die AT 386 843 beschreibt die Verwendung einer hitzebeständigen Molybdänlegierung, die im wesentlichen aus 0,05 - 19,9 Gew.% Silizium, Rest aus Molybdän besteht, unter anderem auch für Formteile, die mit Glas- oder Keramikschmelzen in Berührung kommen. Derartige Formteile weisen neben einer ausgezeichneten Kriechfestigkeit bei hohen Einsatztemperaturen auch eine gute Oxidations- und Korrosionsbeständigkeit auf. Nachteilig ist, daß die genannte Legierung infolge des hohen Siliziumgehaltes praktisch nicht mechanisch umformbar ist, so daß eine Mehrzahl von Bauteilen für Glasschmelz-Einrichtungen nicht wirtschaftlich herstellbar ist.

Die US 4 668 262 beschreibt ein Bauteil, im speziellen eine
Glasschmelzelektrode, aus einem hochschmelzenden Metall, vorzugsweise Molybdän oder Wolfram, das zur Verbesserung der Oxidationsbeständigkeit bei den hohen Einsatztemperaturen mit einer äußeren Schutzschicht aus Chromoxid und einer Zwischenschicht aus Molybdändisilizid versehen ist. Derartige Glasschmelzelektroden weisen zwar eine hervorragende Oxidationsbeständigkeit bei hohen Temperaturen auf. Nachteilig ist jedoch, daß die Schutzschicht im Laufe der Zeit abgebaut wird und daher nur einen zeitlich sehr begrenzten Schutz gegenüber oxidierenden Bestandteilen der Schmelze ergibt. Ferner ist die Färbung der Glasschmelze durch Cr-Oxid in den meisten Fällen nicht tolerierbar. Die Langzeit-Korrosionseigenschaften werden durch derartige Schutzschichten somit nicht nachhaltig verbessert.

Die Aufgabe der vorliegenden Erfindung besteht somit in der Bereitstellung einer Legierung zur Verwendung in Bauteilen, die mit Glas- und/oder Keramikschmelzen in Berührung kommen und die gegenüber bekannten Werkstoffen eine verbesserte Korrosionsbeständigkeit aufweist, insbesondere auch gegenüber hochkorrosiven Glas- und Keramikschmelzen mit Zusätzen an polyvalente Ionen bildenden Metallverbindungen. Dabei dürfen die Verbesserungen weder die Wirtschaftlichkeit der bisher genutzten Glasschmelzverfahren, noch die sonstigen von solchen Bauteil-Werkstoffen geforderten Eigenschaften nennenswert beeinträchtigen.

Diese Aufgabe wird erfindungsgemäß durch die Verwendung von Molybdän- und/oder Wolframlegierungen gemäß Patentansprüche für Bauteile gelöst, die mit Glas- oder Keramikschmelzen in Berührung kommen.

Die bei erfindungsgemäßer Verwendung erzielten Verbesserungen an Korrosionsbeständigkeit in Beibehaltung der sonstigen für diese Verwendung erforderlichen Eigenschaften waren nicht vorhersehbar. Tatsächlich ist die Stabilität von Molybdän und Wolfram, anders als etwa die von fallweise verwendeten Platin-Materialien, thermodynamisch nicht erklärbar, das heißt, die bekannten Redoxpotentiale im System Glasschmelze/Bauteilwerkstoff lassen die Werkstoffe Molybdän/Wolfram für die Verwendung in Glasschmelzen aus dieser Sicht als ungeeignet erscheinen. Die Verträglichkeit des Molybdäns mit Glasschmelzen muß also mit der Kinetik verschiedener, nebeneinander ablaufender Reaktionen erklärt werden. Die kinetischen Vorgänge sind dem Fachmann aber bisher so wenig geläufig, daß sie ihm keine, auch nur halbquantitative Vorhersagen über die Verwendbarkeit/Nichtverwendbarkeit einzelner Werkstoffe auf Molybdän/Wolfram-Basis in Glas-/Keramikschmelzen unterschiedlicher Zusammensetzung und vor allem mit wesentlichen Anteilen an polyvalenten Elementen erlauben.
Die verbesserte Verwendbarkeit der Werkstoffe gemäß vorliegender Erfindung im Kontakt mit Glas-/Keramikschmelzen betrifft in Summe die folgenden Merkmale, bzw. Eigenschaften:
- verbessertes Korrosionsverhalten, das bedeutet im einzelnen
   -- weniger Abtragung von der Werkstoffoberfläche
   -- geringere interkristalline Korrosion (Senkung der Bruchgefahr)
   -- weniger Verunreinigung der Glasschmelze
   -- weniger Bildung von flüssigen Metallseen (Verbindungen aus Mo/W und Schmelzbestandteilen) auf dem Wannenboden (Gefahr von Kurzschlüssen bei elektrisch beheizten Schmelzen)
- weitgehend unveränderte, also nicht reduzierte elektrische Leitfähigkeit im Vergleich mit reinen Metallen Mo, W (wichtig bei Glasschmelzelektroden)
- Beibehaltung der guten mechanischen Bearbeitbarkeit bei der Formgebung der Bauteile im Vergleich mit reinem Mo/W
- keine, die Qualität der Glasschmelze beeinträchtigende Probleme, wie Blasenbildung durch flüchtige Korrosionsprodukte oder Ausgasen der Bauteilwerkstoffe
- keine Notwendigkeit zur Einleitung von Sicherheitsmaßnahmen aufgrund Einstufung der Korrosionsprodukte als gesundheitsgefährdend.

Korrosionsuntersuchungen in unterschiedlichen Glas- und Keramikschmelzen, z.B. Borosilikatglas mit unterschiedlichen Sb-Gehalten, haben gezeigt, daß, wie weiter vorne bereits erwähnt, an entsprechenden Bauteilen zwei unterschiedliche Korrosionsmechanismen wirken, nämlich ein gleichmäßiger oberflächlicher Abtrag, hauptsächlich verursacht durch eine oberflächliche Oxidation des Molybdäns/Wolframs und ein als interkristalline Korrosion erkannter, korrosiver Angriff entlang der Korngrenzen dieser Werkstoffe. Die Mechanismen der Korngrenzenkorrosion in Mo/W-Metallen waren bisher aber nicht bekannt. Dem Problem wurde keine Beachtung geschenkt und dementsprechend wurden keine gezielten Maßnahmen zu dessen Lösung gesetzt.
Die interkristalline, bzw. Korngrenzenkorrosion wird durch Glasbestandteile in der Schmelze verursacht, die von Molybdän/Wolfram reduziert werden und in weiterer Folge mit dem Molybdän/Wolfram bereits bei vergleichsweise tiefen Temperaturen schmelzende Verbindungen bilden, welche sich entlang der Korngrenzen durch Diffusion ausbreiten und somit das Gefüge schwächen.

Korrosionsuntersuchungen an Werkstoffen gemäß Erfindung, die sowohl stromlos, als auch unter Strombelastung durchgeführt wurden, führten zu der überraschenden Erkenntnis, daß die oberflächliche Werkstoffabtragung durch Zugabe von Oxiden/Silikaten zu Molybdän/Wolfram innerhalb der erfindungsgemäßen Grenzen im Vergleich mit Werkstoffen nach dem Stand der Technik deutlich verringert wird. Kleine Gehalte unter 1,6 Vol.% sind weitgehend wirkungslos. Da die Oxide/Silikate bei hohen Gehalten über 10 Vol.% ein nahezu durchgehendes Gefüge-Netzwerk im Werkstoff bilden, kommt es bei diesen Gehalten zu einem für die Korrosionsschutzwirkung nachteiligen Umlöseprozeß, d.h. die Zusätze werden durch die Glasschmelze herausgelöst und durch diese ersetzt.
Im Bereich von 3 - 10 Vol.% geht die Abtragrate deutlich zurück, mit einem Minimum bei ca. 6 Vol.% -Oxid/Silikat.
Der Grund dafür ist im einzelnen noch nicht bekannt. Er kann sowohl in einer besseren kinetischen Hemmung einer Durchtrittsreaktion, als auch in einer verstärkten Hemmung des Hin- und Abtransports der oxidierenden bzw. legierungsbildenden Komponenten liegen.

Es hängt von der Zusammensetzung der Glasschmelze ab, welches Oxid/Silikat im einzelnen die Korrosion mehr oder weniger wirkungsvoll unterdrückt. Bei allen untersuchten Glasschmelzen zeigen die Oxide bzw. Silikate der Metalle aus der Gruppe Zr, Hf und Y sehr gute Ergebnisse, bei einigen Schmelzen wie z.B. bei reinen SiO₂-Schmelzen auch die Verwendung von Seltenen Erd-Oxiden.

Es hat sich nunmehr als für das verbesserte Gesamtkorrosionsverhalten ausschlaggebend erwiesen, korrosionshemmende Maßnahmen im Werkstoff im

Hinblick auf jeden einzelnen der beiden Korrosionsmechanismen: oberflächliche Abtragung und Korngrenzenangriff, selektiv gezielt zu setzen.

Menge und Art der Legierungszusätze zum Mo/W-Werkstoff sind also auf die Zusammensetzung der Keramik-Glasschmelze abzustimmen. In weniger korrosiven Glas- und Keramikschmelzen lässt sich die Bauteilkorrosion durch Oxid/Silikatzusätze zum Mo/W-Werkstoff gemäß Erfindung bereits ausreichend verbessern.
Bei Schmelzen mit starke Komgrenzenkorrosion verursachenden, polyvalenten Elementen, wie Pb, As, Sb, Co, Ni, Mn, wird zufriedenstellender Korrosionsschutz durch die ergänzenden Zusätze Si und/oder B erreicht. Aus der erfindungsgemäßen Zugabe von Oxiden zum Molybdän/Wolfram-Werkstoff resultiert neben der stark verringerten oberflächlichen Abtragung zwar auch ein messbar günstigeres Komgrenzen-Korrosionsverhalten, der Korngrenzenangriff wird aber vor allem durch die ergänzende Zugabe von 0,005 bis 0,04 Gew.% Si oder B nochmals ganz wesentlich verringert. Letztere Elemente reichem sich bevorzugt an den Korngrenzen des Mo/W-Werkstoffes an.
Ausgedehnte Versuchsreihen belegen, dass bei den untersuchten Glasschmelzen das Optimum an Si-, B-Zusätzen bei ca. 0,03 Gew.% liegt. Bei höheren Gehalten steigt die Korrosionsrate wieder an, was mit einer Erhöhung der Diffusionsrate verbunden sein kann. Mit höherer Zusatzrate an B und/oder Si verringert sich aber auch die mechanische Bearbeitbarkeit des Werkstoffes, d.h. die Bearbeitungskosten für die Bauteil-Formgebung steigen. Daher gilt es, die Zugaben an B und/oder Si auf das aus Korrosionsgründen Notwendige zu beschränken.

In den nachfolgenden Ausführungsbeispielen ist das Korrosionsverhalten der nach dem Stand der Technik üblicherweise verwendeten reinen Metalle Mo und/oder W einzelnen erfindungsgemäßen Legierungen gegenübergestellt.

### BEISPIEL 1

In diesem und den nachfolgenden Beispielen werden die Herstellung verschiedener Molybdän-Wolfram-Legierungen und die an ihnen vorgenommenen Korrosionstests beschrieben.
Die Herstellung der einzelnen Werkstoffe erfolgt in allen Beispielen gleich, und zwar nach folgenden Fertigungsschritten:
- Bereitstellung der Metallpulver
- Vermischen mit den Zusätzen, soweit gegeben
- Pressen von Grünlingen
- Sintern
- Wärmebehandlung der Sinterlinge
- 4 bis 5 Umformschritte, ggf. mit zwischengeschalteten Wärmebehandlungen
- mechanische Bearbeitung des Halbzeuges zu einer zylindrischen Elektrode.

Die Korrosionsuntersuchungen an den so gefertigten Bauteilen, hier Glasschmelzelektroden, erfolgten in einer Laboranlage bei 12 cm Elektroden-Eintauchtiefe in eine Glasschmelze. Die Elektrodenlänge betrug einheitlich 20 cm, ihr Durchmesser 1 cm. Der Schmelztiegel bestand aus in Platin eingelassenem Quarzal. Die Grundbeheizung der Schmelze erfolgte über eine 10kHz-Induktionsheizung. Die Elektroden wurden durch Überstülpen einer Keramikhülse und Umspülen mit Argonschutzgas vor Kontakt mit Luftsauerstoff wirksam geschützt. An den Elektroden wurde eine Stromdichte von 1,5 A/cm² bei einer Beheizungsfrequenz von 50 Hz angelegt.
Wegen erhöhter Wärmeabstrahlung von der Schmelzen-Oberfläche bestand in der Schmelze eine Temperaturgradient. Die Temperatur an der Elektrodenspitze betrug gleichbleibend 1640°C. Die Versuchszeit betrug 200 Stunden, anschließend wurde das Glas innerhalb ca. eines Tages auf Raumtemperatur abgekühlt. Die korrosiven Oberflächen-Abtragungen von der Elektrode wurden bei verschiedenen Elektrodeneintauchtiefen mittels lichtmikroskopischer Vermessungen am Elektrodenquerschliff ermittelt.
Die oberflächliche Werkstoffabtragung, d.h. die Durchmesserminderung der Elektrode wird in der Einheit mm/Jahr angegeben.
Daneben wurde mittels elektronenmikroskopischer Untersuchungen die maximale Korrosions-Angriffstiefe, d.h. die maximale Tiefe von der Oberfläche aus bestimmt, in der entlang der Korngrenzen interkristalline Korrosionsreaktionen ermittelbar waren.

Die von der Oberfläche ausgehende, interkristalline Korrosion (Werkstoff-Penetration, gemessen in mm/Jahr) ist in denjenigen Fällen elektronenmikroskopisch nicht sichtbar zu machen, in denen ihr Wert kleiner ist als die ebenfalls in mm/Jahr gemessene Oberflächenabtragung. Entsprechend ist auch ihr Einfluß auf die Gesamtkorrosion nachrangig.
Eine im Verhältnis zur Oberflächenabtragung tatsächlich höhere, und damit elektronenmikroskopisch erfaßbare interkristalline Korrosion ist aber für die Beurteilung des Gesamt-Korrosionsverhaltens bedeutsam, da sie solche, über die Oberflächenabtragung nicht erfaßte Ausbrüche einzelner Kristallite aus dem Werkstoff aufzeigt, welche die mechanische Festigkeit des Bauteils zusätzlich verringert. So liegt beispielsweise die Bauteil-Bruchgefahr in diesen Fällen höher als aufgrund der Wandstärken- bzw. Durchmesser-Verringerung zu erwarten wäre.

Entsprechend dem vorgenannten Herstellungs- und Untersuchungsverfahren wurde reines Molybdänmetallpulver einer Korngröße nach Fischer von 4,1 µm durch isostatisches Pressen kompaktiert, bei 2050°C während 5 Stunden auf eine Dichte von 9,70 g/cm³ gesintert und mittels Schmieden und Hämmern bei Temperaturen zwischen 1400°C und 900°C umgeformt, bei 1600°C während einer Stunde wärmebehandelt und dann mittels mechanischer Bearbeitung zu Stäben geformt.

Die Verwendung von Molybdän rein als Werkstoff für Bauteile, die mit Glas- und Keramikschmelzen in Berührung kommen, sind Stand der Technik.
Die für die Korrosionstests verwendete Glasschmelze bestand aus 79 % SiO₂, 10 % B₂O₃, 3 % Al₂O₃, 4,5 % Na₂O, 0,5 % CaO, 1 % MgO, 2 % Sb₂O₃. Die Korrosionsuntersuchungen entsprechend dem weiter oben beschriebenen Verfahren führten umgerechnet zu einer Flächenabtragung von 17 mm/Jahr und einer mittleren Korrosionstiefe von 20 mm (bezogen auf den Ausgangsdurchmesser).

### BEISPIEL 2

Gemäß dem Herstellungsverfahren von Beispiel 1 wurden in einer weiteren Versuchsserie drei Werkstoffe gemäß Erfindung parallel gefertigt und untersucht. Die Pulveransätze enthielten zusätzlich zum Molybdän ZrO₂-Pulver mit 0,7 µm Korngröße in den Anteilen 3, 5 und 7 Vol.%.
Die zugehörigen Flächenabtragungen betrugen 11 mm/Jahr, 8 mm/Jahr und 8,5 mm/Jahr, die mittleren Korrosionstiefen 19 mm, 16 mm und 16,5 mm pro Jahr (bezogen auf den Ausgangsdurchmesser).

### BEISPIEL 3

Gemäß dem Herstellungsverfahren von Beispiel 1 wurde ein erfindungsgemäßer Werkstoff hergestellt, der folgende Zusammensetzung besaß: 5 Vol.% ZrO₂ (Pulverkorngröße 0,7 µm), 0,03 Gew.% Si (Si-Pulverkorngröße 2,6 µm), Rest Molybdän.
Ein Elektrodenpaar aus diesem Werkstoff wurde der hochkorrosiven Glasschmelze gemäß Beispiel 1 ausgesetzt.
Die als Flächenabtragung ermittelte Korrosionsrate betrug 5,5 mm/Jahr und die mittlere Korrosionstiefe betrug 6 mm/Jahr (bezogen auf den Ausgangsdurchmesser).

### BEISPIEL 4

Gemäß Verfahren nach Beispiel 1 wurde ein Werkstoff folgender erfindungsgemäßer Zusammensetzung gefertigt:
5 Vol.% ZrO₂, 0,03 Gew.% B (Bor-Pulverkorngröße 0,8 µm), Rest Molybdän.

Die für den Korrosionstest verwendete Glasschmelze und die Korrosions-Auswertungsverfahren entsprechen ebenfalls denen von Beispiel 1.

Die als Flächenabtragung ermittelte Korrosionsrate betrug 7 mm/Jahr, die mittlere Korrosionstiefe infolge interkristalliner Korrosion betrug 11,5 mm/Jahr (bezogen auf den Ausgangsdurchmesser der Elektrode).

### BEISPIEL 5

Der gemäß Beispiel 1 gefertigte Werkstoff besaß die Zusammensetzung: 2 Vol.% ZrO₂, 0,03 Gew.% Si (Korngröße 2,6 µm), Rest Molybdän.
Der entsprechend Beispiel 1 durchgeführte Korrosionstest ergab eine Flächenabtragung von 12,5 µm/Jahr und keine ersichtbare Korrosion durch interkristalline Korrosion. Die interkristalline Korrosion liegt damit unter derjenigen über Flächenabtragung (12,5 µm/Jahr). Dieses Ergebnis korrespondiert mit dem in Beispiel 4 gemessenen Wert von 11,5 mm/Jahr für die mittlere Korrosionstiefe, hervorgerufen durch interkristalline Korrosion.

Ein Vergleich der Ergebnisse von Beispiel 4 und 5 unterstützt die in der Beschreibung gemachte Aussage, daß für die Zugabemenge an Oxiden oder Silikaten eine Untergrenze zu berücksichtigen ist.

## Patentansprüche

1. Verwendung eines Werkstoffes, bestehend aus den Metallen Molybdän und/oder Wolfram als Hauptbestandteil mit im Metall fein verteilten Nebenbestandteilen an einem oder mehreren Oxiden und/oder Silikaten der Elemente Zr, Hf, Al, Ca, Mg, Y, La, Ce, Pr, Nd, Gd, Er und ggf. einem weiteren Zusatz an Si und/oder B, für Bauteile die mit korrosiven Glas-und/oder Keramikschmelzen in Berührung kommen, wobei
- die genannten Nebenbestandteile an Oxiden und/oder Silizikaten 1,6 bis 10 Vol.% betragen, falls kein Zusatz oder als Zusatz 0,005 bis 0,01 Gew.% Si und/oder Bor zugegeben ist, oder wobei alternativ
- die genannten Bestandteile an Oxiden und/oder Silikaten 0,8 bis 10 Vol.% betragen, falls der Zusatz > 0,01 bis 0,04 Gew.% Silizium und/oder Bor ist, in beiden Alternativfällen jedoch die gleichzeitige Verwendung von Silikat als Nebenbestandteil und Si als Zusatz ausgeschlossen sind.

2. Verwendung eines Werkstoffes nach Anspruch 1 für Bauteile, die mit korrosiven Glas- und/oder Keramikschmelzen in Berührung kommen, wobei die Schmelze mehr als 0,1 Gew.% an Metallverbindungen, wie Oxide, mindestens eines der Metalle Pb, As, Sb, Co, Ni, Mn enthält.

3. Verwendung eines Werkstoffes nach Anspruch 1 oder 2, **dadurch gekennzeichnet, dass** dieser aus 4,0 bis 8,0 Vol.% eines oder mehrerer Oxide oder Silikate der Metalle Zr, Y, Al oder Hf und 0,01 bis 0,04 Gew.% B, Rest Molybdän und/oder Wolfram besteht.

4. Verwendung eines Werkstoffes nach Anspruch 1 oder 2, **dadurch gekennzeichnet, dass** dieser aus 3,0 bis 7,0 Vol.% eines oder mehrerer Oxide der Metalle Zr, Y, Al oder Hf, Rest Molybdän besteht.

## Claims

1. Use of a material consisting of the metals molybdenum and/or tungsten as the main constituent with secondary constituents, finely distributed in the metal, consisting of one or more oxides and/or silicates of the elements Zr, Hf, Al, Ca, Mg, Y, La, Ce, Pr, Nd, Gd, Er and optionally a further additive of Si and/or B for structural components which come into contact with corrosive molten glasses and/or ceramics, wherein
- the secondary constituents mentioned, consisting of oxides and/or silicates are added in amounts of 1.6 to 10 vol.% if there is no additive or if 0.005 to 0.01 wt.% of Si and/or B are added as an additive, or wherein alternatively
- the constituents mentioned consisting of oxides and/or silicates are added in amounts of 0.8 to 10 vol.% if the additive is > 0.01 to 0.04 wt.% of silicon and/or boron, but in both alternative cases, the simultaneous use of silicate as a secondary constituent and Si as an additive is excluded.

2. Use of a material according to Claim 1 for structural components which come into contact with molten glasses and/or ceramics, wherein the molten material contains more than 0.1 wt.% of metal compounds, such as oxides, of at least one of the metals Pb, As, Sb, Co, Ni, Mn.

3. Use of a material according to Claim 1 or 2, **characterised in that** this material consists of 4.0 to 8.0 vol.% of one or more oxides or silicates of the metals Zr, Y, Al or Hf and 0.01 to 0.04 wt.% of B, the remainder being molybdenum and/or tungsten.

4. Use of a material according to Claim 1 or 2, **characterised in that** this material consists of 3.0 to 7.0 vol.% of one or more oxides of the metals Zr, Y, Al or Hf, the remainder being molybdenum.

## Revendications

1. Utilisation d'une matière comprenant du molybdène et/ou de tungstène métalliques comme composants principaux et incluant des composants secondaires finement répartis consistant en un ou plusieurs oxydes et/ou silicates, des éléments Zr, Hf, Al, Ca, Mg, Y, La, Ce, Pr, Nd, Gd, Er et éventuellement une addition complémentaire de Si et/ou de B, pour des éléments de construction qui viennent au contact de bains corrosifs de verre et/ou de céramique, où
- les teneurs en composants secondaires constitués d'oxydes et/ou de silicates mentionnés ci-dessus sont de 1,6 à 10% en volume en l'absence d'addition ou lorsque l'addition est de 0,005 à 0,01% en poids de Si et/ou de bore, ou en variante,
- les teneurs en composants secondaires constitués d'oxydes et/ou de silicates mentionnés ci-dessus sont de 0,8 à 10% en volume lorsque l'addition est > 0,01 à inférieure à 0,04% en poids de silicium, l'utilisation simultanée de silicate comme composant secondaire et de Si comme addition étant cependant exclus dans les deux variantes.

2. Utilisation d'une matière selon la revendication 1, pour des éléments de construction qui viennent au contact de bains corrosifs de verre et/ou de céramique, où le bain contient plus de 0,1% en poids de composés métalliques, par exemple d'oxydes, d'au moins l'un des métaux Pb, As, Sb, Co, Ni, Mn.

3. Utilisation d'une matière selon la revendication 1 ou la revendication 2, **caractérisée en ce que** celle-ci se compose de 4,0 à 8,0% en volume d'un ou plusieurs oxydes ou silicates des métaux Zr, Y, Al ou Hf et 0,01 à 0,04% en poids de B, solde molybdène et/ou tungstène.

4. Utilisation d'une matière selon la revendication 1 ou 2, **caractérisée en ce que** celle-ci se compose de 3,0 à 7,0% en volume d'un ou plusieurs oxydes des métaux Zr, Y, Al ou Hf, solde molybdène.
